# EUROPÄISCHE PATENTSCHRIFT

(11) **EP 4 348 200 B1**
(45) Veröffentlichungstag und Bekanntmachung des Hinweises auf die Patenterteilung: **29.04.2026**
(21) Anmeldenummer: 22717342.4
(22) Anmeldetag: 08.04.2022
(51) Int. Cl.: G01K 1/024, G01K 11/26, H01Q 7/04

(54) **VORRICHTUNG ZUR LANGZEITTEMPERATURMESSUNG VON TEMPERATUREN OBERHALB VON 200 °C**
DEVICE FOR LONG-TERM TEMPERATURE MEASUREMENT OF TEMPERATURES ABOVE 200°C
DISPOSITIF DE MESURE DE TEMPÉRATURES SUPÉRIEURES À 200 °C À LONG TERME

(30) Priorität: 27.05.2021 AT 504252021
(43) Veröffentlichungstag der Anmeldung: 10.04.2024
(73) Patentinhaber: sensideon GmbH, 4600 Wels (AT)
(72) Erfinder: FACHBERGER, René, 4600 Wels (AT); ORSOLIC, Jozo, 4600 Wels (AT); LEITNER, Dominik, 4600 Wels (AT)
(74) Vertreter: Hübscher & Partner Patentanwälte GmbH
(86) Internationale Anmeldenummer: PCT/AT2022/060109
(87) Internationale Veröffentlichungsnummer: WO 2022/246485

(56) Entgegenhaltungen:
- CN-U- 205 122 774
- DE-A1- 102007 019 403
- GB-A- 824 916
- US-A1- 2006 238 430
- US-A1- 2012 188 133

## Beschreibung

### Technisches Gebiet

Die Erfindung bezieht sich auf eine Vorrichtung zur Langzeittemperaturmessung von Temperaturen oberhalb von 200 °C, mit einem Transponder und einer an den Transponder über eine Koaxialleitung angeschlossenen Antenne, wobei der Antennenanschluss des Transponders mit dem Innenleiter des Koaxialleiters und dessen Außenleiter mit dem Massepotenzial des Transponders verbunden ist.

### Stand der Technik

Insbesondere im Zusammenhang mit in einem Backofen zubereiteten Gargut sind funkabfragbare Vorrichtungen zur Langzeittemperaturmessung von Temperaturen oberhalb von 200 °C bekannt (EP 1985983 A2), die beispielsweise als eine in das Gargut einführbare Messsonde mit Griffteil ausgebildet sein können. Derartige Vorrichtungen weisen einen Transponder und eine an den Transponder über eine Koaxialleitung angeschlossene Antenne auf, wobei der Antennenanschluss des Transponders mit dem Innenleiter des Koaxialleiters und dessen Außenleiter mit dem Massepotenzial des Transponders verbunden ist. Für eine besonders kompakte Bauweise ist die Antenne als verkürzter Monopol ausgebildet, der in einer das Griffteil bildenden Hülle angeordnet ist. Nachteilig ist daran allerdings, dass die verkürzte Monopol Antenne eine nur sehr geringe Eigenimpedanz aufweist, was zu einer beschränkten Leistungsübertragung zwischen Antenne und Transponder führt. Um vor diesem Hintergrund nicht nur eine verbesserte Leistungsübertragung zwischen Transponder und Antenne, sondern auch stabile Funkübertragungsbedingugen zu ermöglichen, weist die Antenne einerseits eine zusätzliche Verlängerungsspule zur Impedanzanpassung auf und andererseits müssen auch die Materialwahl, die Dimensionierung sowie die elektrischen und thermomechanischen Eigenschaften der zahlreichen einzelnen Bauteile im Vorfeld entsprechend berücksichtigt und die einzelnen Bauteile genau aufeinander abgestimmt werden. US 2012/188133 A1 offenbart eine Einstecksonde zum Messen der Kerntemperatur von Lebensmitteln. Die Sonde verfügt über einen SAW-Temperatursensor (635, Abb. 6), der mit einem Koaxialkabel (605, Abb. 6) verbunden ist. Das nicht mit dem Sensor verbundene Ende des Kabels bildet eine Rahmenantenne (615, Abb. 6).

### Darstellung der Erfindung

Der Erfindung liegt somit die Aufgabe zugrunde, eine Vorrichtung der eingangs geschilderten Art so auszugestalten, dass kostengünstig bei geringem Bauteilbedarf und Konstruktionsaufwand verbesserte Übertragungsbedingungen ermöglicht werden, ohne dass eine aufwändige Abstimmung der Bauteile zueinander erforderlich ist.

Die Erfindung löst die gestellte Aufgabe dadurch, dass die selbsttragende Koaxialleitung eine Schleifenantenne bildet, deren Innenleiter auf dem dem Transponder gegenüberliegenden Ende mit dem Massepotenzial verbunden ist. Zufolge dieser Merkmale sind zunächst lediglich die selbsttragende Koaxialleitung und der mit dieser verbundene Transponder erforderlich, damit auf besonders einfache Weise eine mechanisch und thermisch robuste Vorrichtung erhalten wird. Vorzugsweise wird dabei aus der selbsttragende Koaxialleitung eine Schleifenantenne gebildet, in dem die Koaxialleitung zu einer Schleife geformt und der Innenleiter auf dem dem Transponder gegenüberliegenden Ende der Koaxialleitung mit dem Massepotenzial verbunden wird. Unter einer selbsttragenden Koaxialleitung wird im Sinne der Erfindung eine Koaxialleitung verstanden, die aufgrund ihrer eigenen Formstabilität ihr Eigengewicht und das Gewicht des Transponders verformungsfrei aufnehmen kann. Vorteilhafterweise ist die Koaxialleitung so stabil, dass ihre Verformung beim gewöhnlichen Messeinsatz ausgeschlossen werden kann. Die Koaxialleitung weist in der Regel neben dem Innenleiter und dem Außenleiter auch ein zwischen Außen- und Innenleiter liegendes Dielektrikum auf, sodass der durch den Innenleiter führende Stromkreis vorteilhaft durch das Dielektrikum und den Außenleiter gegenüber externen Störfeldern abgeschirmt wird, ohne dass die Übertragungsqualität der Schleifenantenne beeinträchtigt wird. Dadurch, dass der Innenleiter der Schleifenantenne auf dem dem Transponder gegenüberliegenden Ende der Koaxialleitung mit dem Massepotenzial verbunden ist, ergibt sich aufgrund des damit einhergehenden galvanischen Kurzschlusses darüber hinaus auch der Vorteil eines elektrostatischen Entladungsschutzes, ohne dass hierfür zusätzliche Bauteile bzw. Maßnahmen erforderlich sind. Unter einer Verbindung mit dem Massepotenzial wird im Sinne der Erfindung jede direkte oder indirekte elektrische Verbindung mit dem Masseanschluss des Transponders verstanden. Hat der Transponder einen symmetrischen Signalanschluss für die Antenne, so wird im Sinne der Erfindung einer der beiden Signalanschlüsse als Antennenanschluss und der andere als Masseanschluss angesehen, wobei in diesem Fall die konkrete Zuordnung keine Rolle spielt. Die selbsttragende Koaxialleitung kann beispielsweise ein Semi-Rigid bzw. Semi-Flexible Koaxialkabel sein. Der Transponder kann grundsätzlich einen Akustik-Oberflächenwellensensor als Sensoreinheit umfassen. Vorzugsweise weist der Transponder einen Akustik-Oberflächenwellensensor auf, der in einem metallischen Transpondergehäuse, beispielsweise ein TO-25 oder TO-39 Gehäuse, untergebracht ist. Dabei kann das Transpondergehäuse mit dem Masseanschluss des Transponders verbunden sein.

Besonders günstige Bedingungen ergeben sich, wenn die Koaxialleitung einen freiliegenden Metallmantel als Außenleiter aufweist. Dadurch kann auf zusätzliche, den Außenleiter umgebende Ummantelungsmaterialien bzw. Isolationsmaterialien, beispielsweise auf Basis hochtemperaturbeständiger Kunststoffe, verzichtet und damit aufgrund der besseren Lebensmittelverträglichkeit ein breiteres Einsatzgebiet geschaffen werden. In Folge wird nicht nur eine das Übertragungsverhalten negativ beeinflussende Abschirmung der Koaxialleitung vermieden, sondern es können auch die Fertigungskosten weiter reduziert werden.

Um die mechanische Stabilität und Hitzebeständigkeit der Vorrichtung weiter zu verbessern, sodass eine besonders langlebige Bauweise erreicht wird, empfiehlt es sich, dass der Transponder weichlotfrei über einen Adapter mit der Koaxialleitung verbunden ist. Der vorzugsweise metallische Adapter ermöglicht eine sowohl mechanische als auch elektrische Ankopplung des Transponders an der Koaxialleitung, sodass der Verbindungsbereich zwischen Transponder und Koaxialleitung versteift wird. Die weichlotfreie Verbindung wird vorzugsweise über eine Verschweißung oder eine Verschraubung realisiert. Dadurch kann eine elektrisch gut leitende Verbindung geschaffen werden, die im Gegensatz zu Weichlotverbindungen zudem besonders robust gegenüber hohen Temperaturen weit über 200 °C sowie gegenüber mechanischen Stößen und Erschütterungen ist. Grundsätzlich kann vorgesehen sein, dass zur mechanischen Stabilisierung und verbesserten Abdichtung einzelne oder auch alle Schweißverbindungen bzw. Schraubverbindungen durch das Aufbringen eines Stabilisators auf Basis eines Glaslotes oder eines hochtemperaturfesten Klebers abgedichtet und verstärkt sind.

Besonders einfache Fertigungsbedingungen ergeben sich, wenn der Innenleiter auf dem dem Transponder gegenüberliegenden Ende der Koaxialleitung mit dem Außenleiter als Massepotenzial verschweißt ist. Dabei wird im einfachsten Fall die Koaxialleitung unter Ausbildung der Schleifenantenne ausgebogen, wobei zum Schließen der Schleifenantenne der am freien Ende der Koaxialleitung vorliegende Innenleiter im Bereich der sich ausbildenden Antennenbasis mit dem Außenleiter verschweißt wird. Jene Verbindungsstelle zwischen dem Innenleiter im Bereich der Antennenbasis und dem Außenleiter kann ebenfalls durch das Aufbringen eines Stabilisators auf Basis eines Glaslotes oder eines hochtemperaturfesten Klebers abgedichtet und verstärkt sein.

Eine weitere günstige Ausgestaltung kann erhalten werden, wenn der Innenleiter auf dem dem Transponder gegenüberliegenden Ende der Koaxialleitung mit dem Masseanschluss des Transponders verbunden ist, wobei dies vorzugsweise über den Adapter erfolgen kann. Zufolge dieser Maßnahme kann die Vorrichtung besonders kompakt gebaut werden, weil die Koaxialleitung gemeinsam mit dem Transponder eine geschlossene Schleife ohne abstehende Bauteile bildet.

Um insbesondere in diesem Zusammenhang das Übertragungsverhalten zu verbessern, wird vorgeschlagen, dass die Koaxialleitung als Schleifenantenne mit dem Transponder eine geschlossene Schleife, vorzugsweise einen Ring, bildet.

Im Zusammenhang mit Langzeittemperaturmessungen von Gargut empfiehlt es sich, dass die Koaxialleitung eine Zuleitung für den Transponder und eine vom Transponder beabstandete Schleifenantenne bildet. Dadurch kann der Transponder einfach in das Gargut eingeführt werden und beispielsweise dessen Kerntemperatur aufnehmen, während das Übertragungsverhalten der Vorrichtung aufgrund der beabstandeten Schleifenantenne durch das Gargut nicht beeinträchtigt wird.

Besonders günstige Übertragunsgbedingungen ergeben sich, wenn der Schleifendurchmesser der Schleifenantenne einem ganzzahlig Vielfachen der Wellenlänge des Transponders entspricht. Vorzugsweise ist der Schleifendurchmesser an den Wellenlängenbereich angepasst, in dem der Transponder ausgelesen wird, sodass der Wellenwiderstand bereits ohne zusätzliche Anpassungen eine zuverlässige Abstrahlung ermöglicht.

Um eine hohe Langlebigkeit insbesondere auch in Gegenwart von Wasserdampf zu ermöglichen, wird vorgeschlagen, dass der Außenleiter der Koaxialleitung wärmebehandelt ist. Zufolge dieser Maßnahme wird der vorwiegend aus Kupfer gebildete Außenleiter passiviert, sodass dieser eine stark verringerte Oxidationsneigung aufweist, auch wenn der Außenleiter wiederholt über längere Zeiträume einer Wasserdampfatmosphäre bei Temperaturen über 200 °C ausgesetzt ist. Zur Passivierung üblicher Koaxialleitungen werden diese beispielsweise in zwei aufeinanderfolgenden Prozessschritten jeweils 15 - 30 Minuten bei jeweils 250 °C in gewöhnlicher Luftatmosphäre wärmebehandelt, wonach ggf. austretendes Dielektrikum entfernt wird.

Um trotz vereinfachter Fertigungsbedingungen eine verbesserte Abdichtung und somit einen besseren Schutz gegenüber aggressiven externen Einflüssen, wie beispielsweise Wasserdampf, zu ermöglichen, empfiehlt es sich, dass der Transponder in die Aufnahmekammer einer Schutzhülse eingesetzt ist. Vorzugsweise ist die metallische Schutzhülse mit dem Außenleiter der Koaxialleitung verschweißt, sodass sich bereits ohne zusätzliche Dichtelemente eine zuverlässige Dichtwirkung ergibt. Die Schutzhülse kann grundsätzlich mit dem Masseanschluss des Transponders verbunden sein. Dabei kann die Schutzhülse auch eine Verbindung zwischen dem Masseanschluss des Transponders und dem Außenleiter der Koaxialleitung herstellen. Für den Fall, dass der Transponder weichlotfrei über einen Adapter mit dem Koaxialleiter verbunden ist, können sowohl der Transponder als auch der Adapter in die Aufnahmekammer der Schutzhülse eingesetzt sein.

### Kurze Beschreibung der Erfindung

In der Zeichnung ist der Erfindungsgegenstand beispielsweise dargestellt. Es zeigen
- Fig. 1: eine schematische Darstellung einer erfindungsgemäßen Vorrichtung in einer ersten Ausführungsform,
- Fig. 2: eine der Fig. 1 entsprechende Detailansicht des Transponders und des Adapters in einem größeren Maßstab,
- Fig. 3: eine schematische Darstellung einer erfindungsgemäßen Vorrichtung in einer weiteren Ausführungsform und
- Fig. 4: eine der Fig. 3 entsprechende Detailansicht des Transponders und des Adapters in einem größeren Maßstab.

### Wege zur Ausführung der Erfindung

Eine erfindungsgemäße Vorrichtung zur Langzeittemperaturmessung von Temperaturen oberhalb von 200 °C umfasst einen Transponder 1. Der Antennenanschluss 2 des Transponders ist mit dem Innenleiter 3 einer selbsttragenden Koaxialleitung 4 verbunden, wohingegen der Außenleiter 5 der Koaxialleitung 4 über einen metallischen Adapter 6 mit dem Massepotenzial des Transponders 1 verbunden ist. Die schematisch angedeuteten Verbindungsstellen 7, 8 sind vorzugsweise als Schweißverbindungen ausgebildet. Der Adapter 6 ermöglicht eine sowohl mechanische als auch elektrische Ankopplung des Transponders 1 an der Koaxialleitung 4, sodass der Verbindungsbereich zwischen Transponder 1 und Koaxialleitung 4 versteift wird.

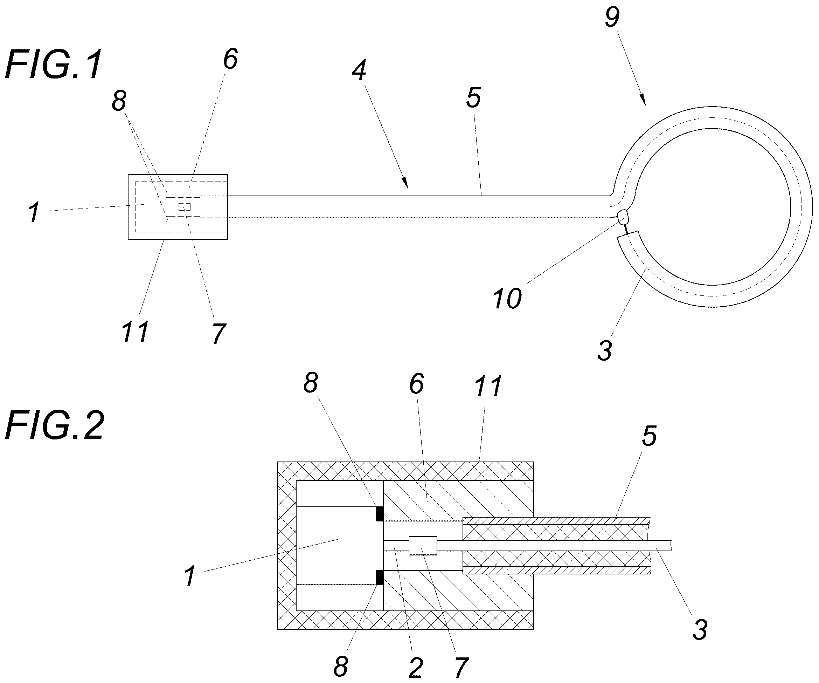

Die selbsttragende Koaxialleitung 4 bildet darüber hinaus eine Zuleitung für den Transponder 1 und eine vom Transponder 1 beabstandete Schleifenantenne 9, wobei der Innenleiter 3 auf dem dem Transponder 1 gegenüberliegenden Ende der Koaxialleitung 4 mit dem Außenleiter 5 als Massepotenzial verschweißt ist, wie dies durch die Verbindungsstelle 10 an der Antennenbasis angedeutet wird. Die Verbindungsstelle kann dabei zusätzlich mit einem nicht näher dargestellten Stabilisator, z.B. auf Basis eines Glaslotes oder eines hochtemperaturfesten Klebers, abgedichtet und verstärkt sein. Für einen verbesserten Schutz des Transponders 1 vor beispielsweise Wasserdampf kann eine Schutzhülse 11 vorgesehen sein, die den Transponder 1 und ggf. auch den Adapter 6 umgibt, wie dies in Fig. 1 und 2 illustriert ist.

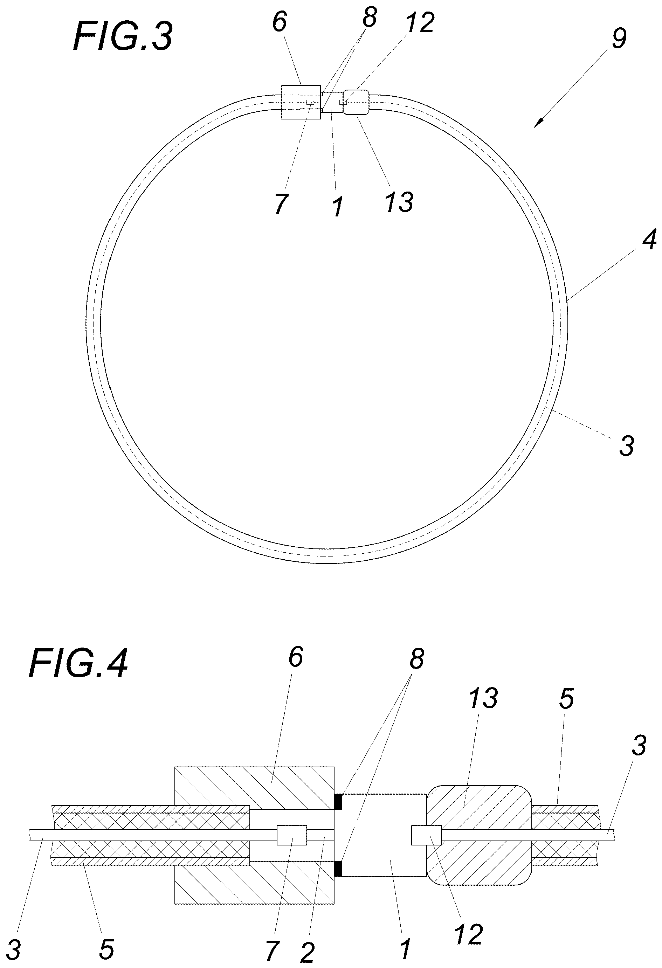

Fig. 3 und 4 zeigen eine weitere Ausführungsform einer erfindungsgemäßen Vorrichtung. Dabei bildet die Koaxialleitung 4 als Schleifenantenne 9 mit dem Transponder 1 eine geschlossene Schleife in Form eines Rings. Der Innenleiter 3 ist auf dem dem Transponder 1 gegenüberliegenden Ende der Koaxialleitung 4 mit dem Masseanschluss 12 des Transponders 1 verbunden. Jene Verbindungsstelle ist darüber hinaus zur mechanischen Stabilisierung und verbesserten Abdichtung durch einen Stabilisator 13 abgedichtet und verstärkt, der beispielsweise ein Glaslot oder ein hochtemperaturfester Kleber sein kann. Der Transponder 1 kann ein metallisches Transpondergehäuse, beispielsweise ein TO-25 oder TO-39 Gehäuse, aufweisen, das mit dem Masseanschluss 12 des Transponders 1 verbunden ist. Es kann auch vorgesehen sein, dass für eine zusätzliche Schutzwirkung der Adapter 6 den Transponder 1 ummantelt.

## Patentansprüche

1. Vorrichtung zur Langzeittemperaturmessung von Temperaturen oberhalb von 200 °C, mit einem Transponder (1) und einer an den Transponder (1) über eine Koaxialleitung (4) angeschlossenen Antenne, wobei der Antennenanschluss (2) des Transponders (1) mit dem Innenleiter (3) des Koaxialleiters (4) und dessen Außenleiter (5) mit dem Massepotenzial des Transponders (1) verbunden ist, wobei die selbsttragende Koaxialleitung (4) eine Schleifenantenne (9) bildet, deren Innenleiter (3) auf dem dem Transponder (1) gegenüberliegenden Ende mit dem Massepotenzial verbunden ist.

2. Vorrichtung nach Anspruch 1, **dadurch gekennzeichnet, dass** die Koaxialleitung (4) einen freiliegenden Metallmantel als Außenleiter (5) aufweist.

3. Vorrichtung nach Anspruch 1 oder 2, **dadurch gekennzeichnet, dass** der Transponder (1) weichlotfrei über einen Adapter (6) mit dem Koaxialleiter (4) verbunden ist.

4. Vorrichtung nach einem der Ansprüche 1 bis 3, **dadurch gekennzeichnet, dass** der Innenleiter (3) auf dem dem Transponder (1) gegenüberliegenden Ende der Koaxialleitung (4) mit dem Außenleiter (5) als Massepotenzial verschweißt ist.

5. Vorrichtung nach einem der Ansprüche 1 bis 3, **dadurch gekennzeichnet, dass** der Innenleiter (3) auf dem dem Transponder (1) gegenüberliegenden Ende der Koaxialleitung (4) mit dem Masseanschluss (12) des Transponders (1) verbunden ist.

6. Vorrichtung nach einem der Ansprüche 1 bis 5, **dadurch gekennzeichnet, dass** die Koaxialleitung (4) gemeinsam mit dem Transponder (1) eine geschlossene Schleife bildet.

7. Vorrichtung nach einem der Ansprüche 1 bis 5, **dadurch gekennzeichnet, dass** die Koaxialleitung (4) eine Zuleitung für den Transponder (1) und eine vom Transponder (1) beabstandete Schleifenantenne (9) bildet.

8. Vorrichtung nach einem der Ansprüche 1 bis 7, **dadurch gekennzeichnet, dass** der Schleifendurchmesser der Schleifenantenne (9) einem ganzzahlig Vielfachen der Wellenlänge des Transponders (1) entspricht.

9. Vorrichtung nach einem der Ansprüche 1 bis 8, **dadurch gekennzeichnet, dass** der Außenleiter (5) der Koaxialleitung (4) wärmebehandelt ist.

10. Vorrichtung nach einem der vorangegangenen Ansprüche, **dadurch gekennzeichnet, dass** der Transponder (1) in die Aufnahmekammer einer Schutzhülse (11) eingesetzt ist.

## Claims

1. Device for long-term temperature measurement of temperatures above 200 °C, comprising a transponder (1) and an antenna connected to the transponder (1) via a coaxial transmission line (4), wherein the antenna connection (2) of the transponder (1) is connected to the inner conductor (3) of the coaxial transmission line (4) and its outer conductor (5) is connected to the ground potential of the transponder (1), wherein the self-supporting coaxial transmission line (4) forms a loop antenna (9), the inner conductor (3) of the loop antenna (9) being connected, at its end opposite the transponder (1), to the ground potential.

2. Device according to claim 1, **characterised in that** the coaxial transmission line (4) comprises an exposed metal sheath as outer conductor (5).

3. Device according to claim 1 or 2, **characterised in that** the transponder (1) is connected to the coaxial transmission line (4) in a soft-solder-free manner via an adapter (6).

4. Device according to any one of claims 1 to 3, **characterised in that** the inner conductor (3), at the end of the coaxial transmission line (4) opposite the transponder (1), is welded to the outer conductor (5), which forms the ground potential.

5. Device according to any one of claims 1 to 3, **characterised in that** the inner conductor (3), at the end of the coaxial transmission line (4) opposite the transponder (1), is connected to the ground terminal (12) of the transponder (1).

6. Device according to any one of claims 1 to 5, **characterised in that** the coaxial transmission line (4) together with the transponder (1) forms a closed loop.

7. Device according to any one of claims 1 to 5, **characterised in that** the coaxial transmission line (4) forms a supply line for the transponder (1) and a loop antenna (9) spaced apart from the transponder (1).

8. Device according to any one of claims 1 to 7, **characterised in that** the loop diameter of the loop antenna (9) corresponds to an integer multiple of the wavelength of the transponder (1).

9. Device according to any one of claims 1 to 8, **characterised in that** the outer conductor (5) of the coaxial transmission line (4) is heat-treated.

10. Device according to any one of the preceding claims, **characterised in that** the transponder (1) is inserted into the receiving chamber of a protective sleeve (11).

## Revendications

1. Dispositif pour la mesure à long terme de températures supérieures à 200 °C, comprenant un transpondeur (1) et une antenne raccordée au transpondeur (1) par l'intermédiaire d'un câble coaxial (4), le raccordement d'antenne (2) du transpondeur (1) étant relié au conducteur interne (3) du câble coaxial (4) et son conducteur extérieur (5) étant relié au potentiel de masse du transpondeur (1), le câble coaxial autoportant (4) formant une antenne cadre (9) dont le conducteur intérieur (3) est relié au potentiel de masse à l'extrémité opposée au transpondeur (1).

2. Dispositif selon la revendication 1, **caractérisé en ce que** le câble coaxial (4) comporte une gaine métallique dénudée servant de conducteur extérieur (5).

3. Dispositif selon la revendication 1 ou 2, **caractérisé en ce que** le transpondeur (1) est relié au conducteur coaxial (4) sans soudure tendre, par l'intermédiaire d'un adaptateur (6).

4. Dispositif selon l'une des revendications 1 à 3, **caractérisé en ce que** le conducteur interne (3) est soudé au conducteur externe (5) comme potentiel de masse à l'extrémité du câble coaxial (4) opposée au transpondeur (1).

5. Dispositif selon l'une des revendications 1 à 3, **caractérisé en ce que** le conducteur interne (3) est relié à la connexion de masse (12) du transpondeur (1) à l'extrémité du câble coaxial (4) opposée au transpondeur (1).

6. Dispositif selon l'une des revendications 1 à 5, **caractérisé en ce que** le câble coaxial (4) forme une boucle fermée avec le transpondeur (1).

7. Dispositif selon l'une des revendications 1 à 5, **caractérisé en ce que** le câble coaxial (4) forme un câble d'alimentation pour le transpondeur (1) et une antenne cadre (9) espacée du transpondeur (1).

8. Dispositif selon l'une des revendications 1 à 7, **caractérisé en ce que** le diamètre de cadre de l'antenne cadre (9) correspond à un multiple entier de la longueur d'onde du transpondeur (1).

9. Dispositif selon l'une des revendications 1 à 8, **caractérisé en ce que** le conducteur extérieur (5) du câble coaxial (4) est traité thermiquement.

10. Dispositif selon l'une des revendications précédentes, **caractérisé en ce que** le transpondeur (1) est inséré dans la chambre de réception d'un manchon de protection (11).
